# EUROPEAN PATENT APPLICATION

(11) **EP 4 725 675 A1**
(43) Date of publication of application: **15.04.2026**
(21) Application number: 25207503.1
(22) Date of filing: 08.10.2025
(51) Int. Cl.: B29C 45/17, B29C 45/76, B29C 45/84, G06F 21/62

(54) **MOLDING MACHINE**

(30) Priority: 08.10.2024 JP 2024176556
(71) Applicant: Toyo Innovex Co., Ltd., Akashi-shi, Hyogo (JP)
(72) Inventor: TARUYA, Koji, Akashi-shi, Hyogo (JP); YAMAMOTO, Hiroyuki, Akashi-shi, Hyogo (JP)
(74) Representative: Pintz, György

(57) **Abstract**

A molding machine includes: a clamping device configured to open, close, and clamp a mold; an injection device configured to inject a molding material into a cavity of the clamped mold; a display device configured to display information; and a control device configured to control the clamping device, the injection device, and the display device. The control device causes the display device to display a warranty list screen displaying respective identifiers of a plurality of components constituting the molding machine in a list for each warranty period.

## Description

### BACKGROUND OF THE INVENTION

### Field of the Invention

The present invention relates to a molding machine to inject a molding material into a mold.

### Description of the Related Art

There are molding machines from the past (e.g., refer to PTL 1) that include a clamping device to open, close, and clamp a mold and an injection device to inject a molding material (e.g., molten resin, molten metal) into a cavity of the clamped mold. The molding machines thus configured are composed by combining a very large number of components.

PTL 1 refers to JP 2022-052498 A.

### SUMMARY OF THE INVENTION

The components of such a molding machine have respective warranty periods. In general, the warranty periods are individually stated in instruction manuals and/or warranty cards of the respective components. It is thus very difficult for users of such a molding machine to recognize the respective warranty periods for the plurality of components.

In view of such a circumstance, one or more embodiments of the present disclosure provide a molding machine facilitating recognition of respective warranty periods for a plurality of components.

A molding machine of the present invention includes: a clamping device configured to open, close, and clamp a mold; an injection device configured to inject a molding material into a cavity of the clamped mold; a display device configured to display information; and a control device configured to control the clamping device, the injection device, and the display device, wherein the control device causes the display device to display a warranty list screen displaying respective identifiers of a plurality of components constituting the molding machine in a list for each warranty period.

The present invention facilitates recognition of the respective warranty periods for the plurality of components.

### BRIEF DESCRIPTION OF THE DRAWINGS

FIG. 1 is a side view of an injection molding machine according to an embodiment of the present invention.
FIG. 2 is a hardware block diagram of the injection molding machine.
FIG. 3 is a flowchart of an initial setting process.
FIG. 4A is a diagram illustrating an initial setting screen, FIG. 4B is a diagram illustrating an example of initial setting information, and FIG. 4C is a diagram illustrating another example of the initial setting information.
FIG. 5 is a flowchart of a warranty list display process.
FIG. 6 is a chart illustrating the progression of the number of shots.
FIG. 7A is a diagram illustrating an example of maintenance records and FIG. 7B is a diagram illustrating an example of a related parts list.
FIG. 8 illustrates diagrams of examples of a screen that can be displayed in the warranty list display process.
FIG. 9 is an example of a screen illustrating a replacement parts list.

### DETAILED DESCRIPTION OF THE INVENTION

A description is given below to an injection molding machine 10 according to the present invention with reference to the drawings. The injection molding machine 10 is a device that injects a measured molten resin (molding material) into a mold for molding a molded article (hereinafter, referred to as "injection molding"). It should be noted that specific examples of the molding machine are not limited to the injection molding machine 10 and may be a die casting machine that injects molten metal (molding material) into a mold for molding a molded article.

### Configuration of Injection Molding Machine 10

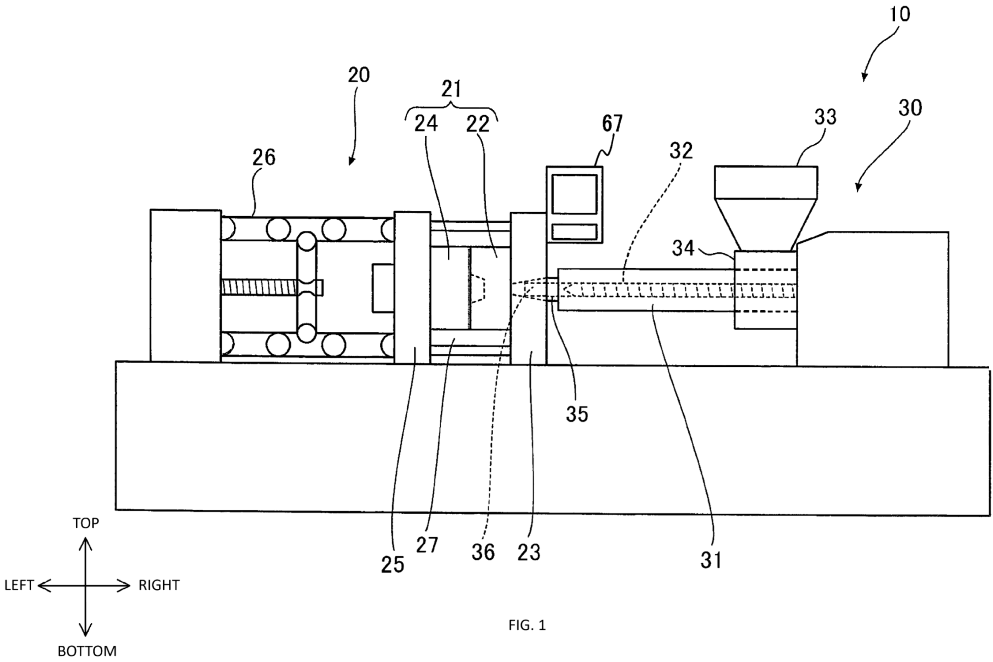

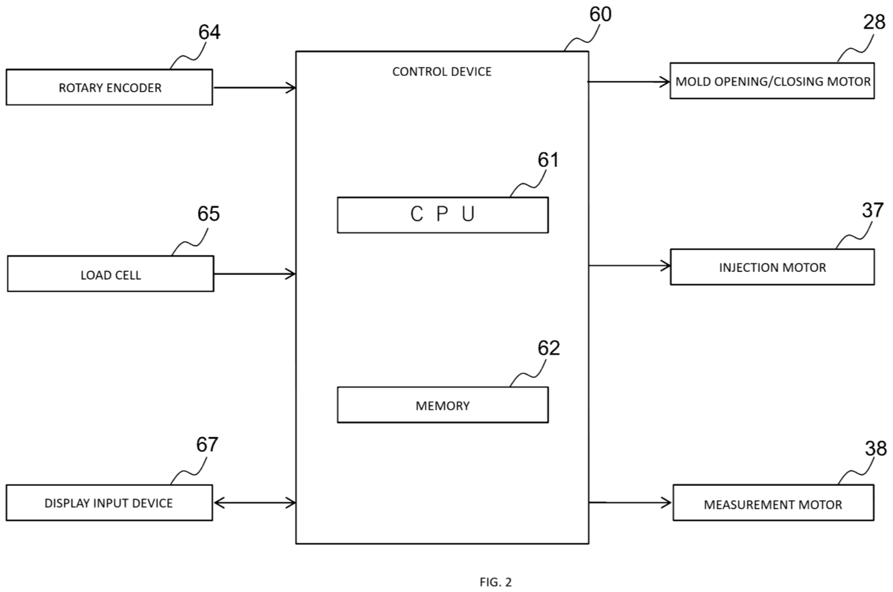

FIG. 1 is a side view of the injection molding machine 10 according to the present embodiment. FIG. 2 is a hardware block diagram of the injection molding machine 10. As illustrated in FIGs. 1 and 2, the injection molding machine 10 mainly includes a clamping device 20, an injection device 30, and a control device 60.

The clamping device 20 performs opening, closing, and clamping of a mold 21. Specifically, the clamping device 20 is mainly provided with a fixed die plate 23 supporting a fixed-side mold 22 and a movable die plate 25 supporting a movable-side mold 24. The fixed-side mold 22 and the movable-side mold 24 are supported to face each other in a left-right direction (horizontal direction) of the injection molding machine 10.

The movable die plate 25 moves in the left-right direction along tie bars 27 screwed to tie bar nuts (not shown) by transmission of a driving force of a mold opening/closing motor 28 through a toggle link mechanism 26. When the movable die plate 25 moves in the left direction, the movable-side mold 24 is separated from the fixed-side mold 22. Meanwhile, when the movable die plate 25 moves in the right direction, the movable-side mold 24 abuts on the fixed-side mold 22 to form a cavity (internal space) inside the mold 21. Then, when a pressure is further applied in the direction of moving the movable die plate 25 in the right direction, the fixed-side mold 22 and the movable-side mold 24 are clamped.

The injection device 30 plasticizes and measures a molding material for injection. The injection device 30 according to the present embodiment is arranged facing the clamping device 20 in the horizontal direction (on the right of the clamping device 20). The injection device 30 is mainly provided with a heating cylinder 31, a screw 32, a hopper 33, and a hopper block 34.

The heating cylinder 31 is a cylindrical member extending in the left-right direction of the injection molding machine 10. The heating cylinder 31 is mainly provided with a resin passage 35 and a nozzle 36. In addition, the heating cylinder 31 has an outer circumferential surface to which a band heater (not shown) is attached to heat the heating cylinder 31.

The resin passage 35 is a columnar space extending in the axial direction (longitudinal direction) inside the heating cylinder 31. The resin passage 35 communicates with the outside (cavity of the mold 21) of the heating cylinder 31 through the nozzle 36 provided at a distal end (front end) of the heating cylinder 31. In other words, the resin passage 35 is a space extending from the nozzle 36 along the axial direction.

The screw 32 is a columnar member. The screw 32 has an outer circumferential surface provided with a groove (hereinafter, referred to as a "spiral groove") extending in a spiral shape along the longitudinal direction of the screw 32. The screw 32 is stored in an internal space of the heating cylinder 31 in a state that allows the injection molding machine 10 to move in the left-right direction (hereinafter, referred to as "move forward and backward") and to rotate. In addition, the screw 32 in the heating cylinder 31 is configured in a replaceable manner. In other words, the screw 32 with different specifications (e.g., the material, the shape of the spiral groove, the volume of the spiral groove) is allowed to be inserted into the heating cylinder 31.

The screw 32 moves forward and backward by transmission of a driving force of an injection motor 37 and rotates by transmission of a driving force of a measurement motor 38. More specifically, when the injection motor 37 is normally rotated, the screw 32 moves toward the distal end (i.e., the nozzle 36) of the heating cylinder 31 (moves forward). Meanwhile, when the injection motor 37 is counter-rotated, the screw 32 moves toward the basal end (i.e., opposite side to the nozzle 36) of the heating cylinder 31 (moves backward).

In the description below, within a region that can be reached by the distal end of the screw 32 in the heating cylinder 31, the position closest to the nozzle 36 is referred to as a "forward limit" and the position farthest from the nozzle 36 is referred to as a "backward limit." In addition, the terms "normal rotation" and "counter rotation" of the injection motor 37 do not specify absolute rotation directions and merely specify relative relationship (i.e., normal rotation and counter rotation are rotation in opposite directions).

The hopper 33 is a funnel-shaped member to retain the granular resin as a raw material. The hopper block 34 is a member supporting the heating cylinder 31 and the hopper 33. The hopper 33 communicates with the resin passage 35 on the basal end side, rather than the distal end, of the heating cylinder 31 through the hopper block 34. The granular resin retained in the hopper 33 is supplied to the resin passage 35 of the heating cylinder 31 through an opening provided at a lower end. The granular resin used for the injection molding machine 10 is, for example, so-called "pellets (granular resin)" molded in a columnar (granular) shape.

In the hopper 33, an internal space is formed to pass the pellets. The internal space of the hopper 33 has the shape of an inverted truncated cone with a cross section gradually decreasing downward. The hopper 33 is provided with an upper end opening and a lower end opening. Then, the pellets (or recycled resin) supplied from a raw material feeding device (not shown) enter the internal space of the hopper 33 through the upper end opening and are supplied to the hopper block 34 (heating cylinder 31) through the lower end opening.

The injection device 30 causes the injection motor 37 to counter-rotate and causes the measurement motor 38 to rotate, thereby causing the screw 32 to move backward while rotating. The pellets supplied through the hopper 33 are thus filled (measured) in the resin passage 35 in front of the screw 32 while being plasticized. In addition, the injection device 30 causes the injection motor 37 to normally rotate, thereby causing the screw 32 to move forward. The molten resin in front of the screw 32 is thus injected into the cavity of the mold 21 through the nozzle 36.

### Configuration of Control Device 60

As illustrated in FIG. 2, the control device 60 is provided with a central processing unit (CPU) 61 and a memory 62. The memory 62 is configured with, for example, a read only memory (ROM), a random access memory (RAM), a hard disk drive (HDD), or a combination of them. The control device 60 achieves processes described later by causing the CPU 61 to read and execute program codes stored in the ROM or the HDD. The RAM is used as a work area for the CPU 61 to execute the programs.

It should be noted that the specific configuration of the control device 60 is not limited to this and may be achieved by hardware, such as an application specific integrated circuit (ASIC) and a field-programmable gate array (FPGA).

The control device 60 controls the entire operation of the injection molding machine 10. More specifically, the control device 60 controls the mold opening/closing motor 28, the injection motor 37, the measurement motor 38, and a display input device 67 based on various signals output from a rotary encoder 64, a load cell 65 (pressure sensor), and the display input device 67.

The mold opening/closing motor 28, the injection motor 37, and the measurement motor 38 are, for example, servomotors to generate a driving force of opening and closing the mold 21, a driving force of moving the screw 32 forward and backward, and a driving force of rotating the screw 32 in accordance with control by a servo amplifier, not shown.

The rotary encoder 64 is a sensor to detect the speed and the distal end position of the screw 32. More specifically, the rotary encoder 64 outputs a pulse signal in accordance with the rotation of the injection motor 37 to the control device 60. Then, the control device 60 specifies the speed of the screw 32 by the number of pulse signals output per unit time. In addition, the control device 60 specifies the distal end position of the screw 32 by the accumulated value of the pulse signals.

The load cell 65 is a pressure sensor to detect a pressure (back pressure) applied to the screw 32. More specifically, the load cell 65 outputs a pressure signal (voltage value), in accordance with the pressure applied to the screw 32, to the control device 60. Then, the control device 60 specifies the pressure applied to the screw 32 based on the pressure signal output from the load cell 65.

The display input device 67 is a user interface provided with a display (display device) to display various kinds of information to be notified to an operator and buttons, switches, dials, and the like (input devices) to accept input of information from an operator. The display input device 67 may be provided with a touchscreen superimposed on the display. The display input device 67 accepts an input operation by an operator and outputs an input signal corresponding to the accepted input operation to the control device 60.

### Injection Control Process

The control device 60 controls the clamping device 20 and the injection device 30 to perform an injection control process described below, thereby molding molded articles. The control device 60 also counts the number of times performing the injection control process (hereinafter, referred to as the "number of shots") after installation of the injection molding machine 10 and causes the memory 62 to store the counted number of shots. The number of shots may be paraphrased as the number of times forming a molded article or the number of times that the injection device 30 injects the molding material into the cavity.

At first, the control device 60 causes the mold opening/closing motor 28 to rotate to close and clamp the mold 21. Thus, a cavity is formed in the mold 21. Then, the control device 60 causes the injection motor 37 to normally rotate to move the screw 32 forward. This causes the molten resin measured in the region, in front of the screw 32, in the heating cylinder 31 to be injected into the cavity of the mold 21.

Then, the control device 60 causes the screw 32 to move backward during rotation to plasticize the granular resin supplied to the heating cylinder 31 through the hopper 33 and to measure the molten resin into the space, in front of the screw 32, of the heating cylinder 31. Then, the control device 60 causes the mold opening/closing motor 28 to rotate to open the mold 21 and to cause a robot arm to eject the molded article from the opened mold 21.

### Initial Setting Process

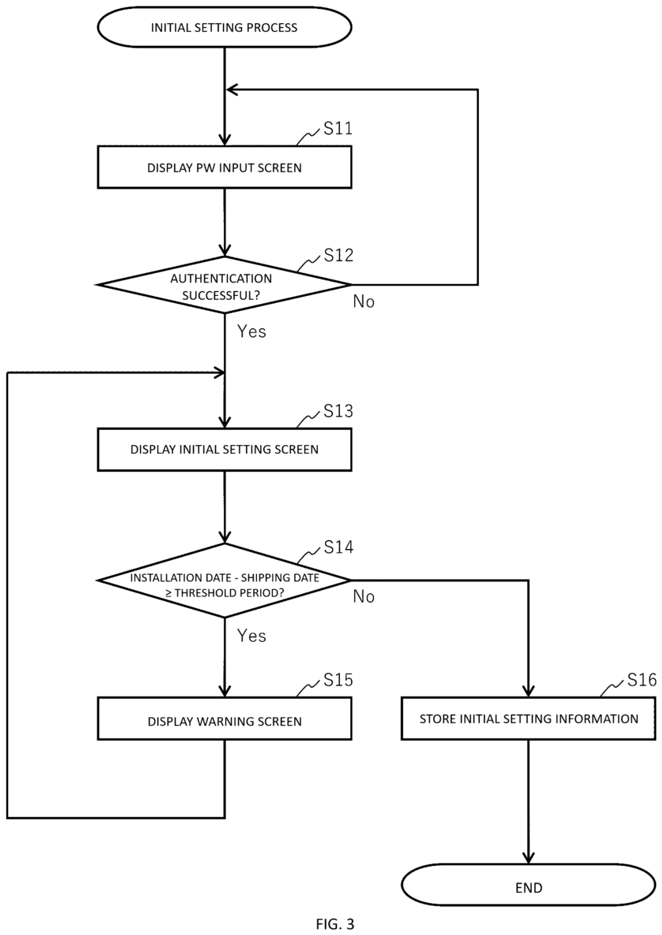

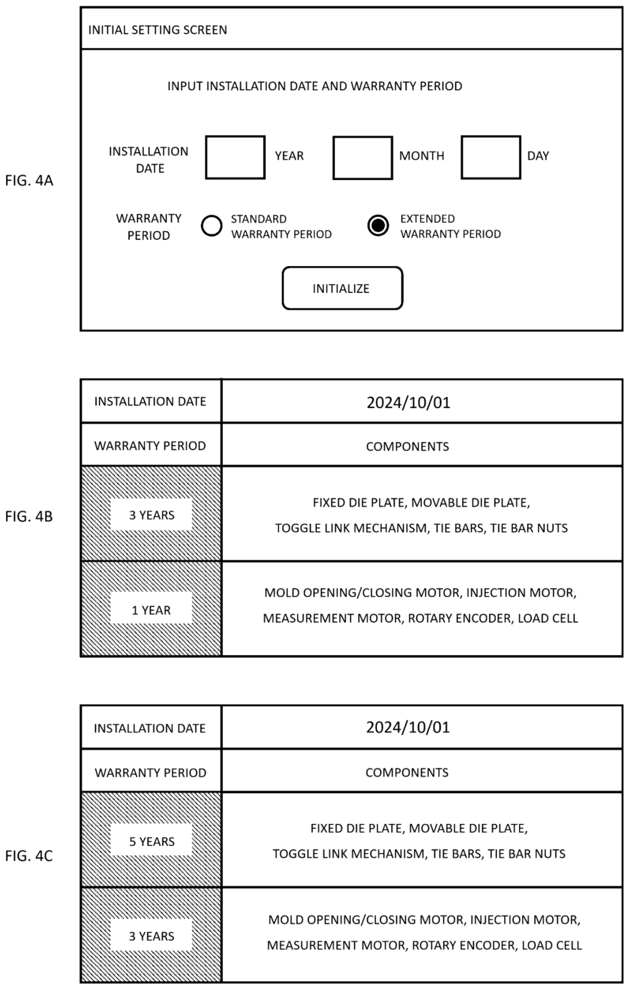

FIG. 3 is a flowchart of the initial setting process. FIG. 4A is a diagram illustrating an initial setting screen, FIG. 4B is a diagram illustrating an example of initial setting information, and FIG. 4C is a diagram illustrating another example of the initial setting information. The initial setting process is a process to be performed when the injection molding machine 10 is installed at a designated location (e.g., user factory). The control device 60 performs the initial setting process in accordance with, for example, instructions by a serviceman of the manufacturer of the injection molding machine 10.

At first, the control device 60 causes the display input device 67 to display a PW input screen, not shown (S11). The PW input screen is a screen for causing the serviceman to input an administrator password. If the administrator password input to the PW input screen is successfully authenticated (e.g., coincides with an administrator password stored in the memory 62 in advance) (S12: Yes), the control device 60 causes the display input device 67 to display an initial setting screen illustrated in FIG. 4A (S13). Meanwhile, if the administrator password is not authenticated (S12: No), the control device 60 prompts for input of the correct administrator password through the PW input screen (S11).

The initial setting screen is a screen causing an operator to input the date and time of installing the injection molding machine 10 at the designated location (i.e., the date and time of allowing the injection control process to be performed, and hereinafter referred to as an "installation date") and to input respective warranty periods for the plurality of components constituting the injection molding machine 10. The installation date and the warranty periods are examples of the initial setting information. The control device 60 then stands by for performing processes at step S14 and later until the initial setting information is input through the initial setting screen and an [INITIALIZE] icon is tapped.

The components constituting the injection molding machine 10 refer to, for example, the parts mentioned with reference to FIGs. 1 and 2, such as the fixed die plate 23, the movable die plate 25, the toggle link mechanism 26, the tie bars 27, the tie bar nuts, the mold opening/closing motor 28, the injection motor 37, the measurement motor 38, the rotary encoder 64, and the load cell 65. It should be noted that the components of the injection molding machine 10 are not limited to the examples described earlier. In addition, the injection molding machine 10 may include components to which the respective warranty periods are set and components to which the respective warranty periods are not set.

The warranty period is a period to warrant the quality of each component. The warranty period is also a period to replace or repair (hereinafter, referred to as "recover") a component free of charge when a trouble occurs in the component. It should be noted that a trouble during the warranty period may be unconditionally recovered or may be recovered only if predetermined conditions are satisfied (e.g., having performed periodic maintenance). It should also be noted that each component has an individual warranty period. In addition, when a component is replaced, the warranty period expires only for the replaced component. Moreover, the warranty periods may include a standard warranty period and an extended warranty period.

The standard warranty period is a warranty period to be unconditionally set to every injection molding machine 10. The extended warranty period is a warranty period longer than the standard warranty period. A user of the injection molding machine 10 may choose between, for example, the standard warranty period or the extended warranty period by paying an additional fee. In the present embodiment, the standard warranty period of three years and the extended warranty period of five years are set to the fixed die plate 23, the movable die plate 25, the toggle link mechanism 26, the tie bars 27, and the tie bar nuts. In addition, the standard warranty period of one year and the extended warranty period of three years are set to the mold opening/closing motor 28, the injection motor 37, the measurement motor 38, the rotary encoder 64, and the load cell 65. It should be noted that how to choose between the standard warranty period or the extended warranty period, the components subjected to the warranty, and the length of each period are not limited to the examples described earlier.

Still in addition, if the number of shots counted by the control device 60 reaches the threshold number of shots (e.g., ten million times), the warranty periods for all the components expire regardless of whether the warranty periods have come. That is, the warranty period for each component expires if either criterion that the preset warranty period has come or that the number of shots reaches the threshold number of shots, whichever is earlier, is satisfied. Moreover, if periodic maintenance of the injection molding machine 10 is not performed for a predetermined period (a second interval, described later), the warranty periods for all the components expire early regardless of whether the criterion described above is satisfied.

Then, if the [INITIALIZE] icon is tapped through the display input device 67, the control device 60 compares an interim period from the shipping date of the injection molding machine 10 to the installation date input to the initial setting screen with a preset threshold period (e.g., two months) (S14). The shipping date is the date and time of shipping the injection molding machine 10 from the manufacturing factory and is stored in the memory 62 in advance. The threshold period is set sufficiently longer than the period for installing the injection molding machine 10 after shipping.

Then, if the interim period is the threshold period or more (S14: Yes), the control device 60 causes the display input device 67 to display a warning screen, not shown (S15). The warning screen is a screen to warn that the elapsed time from the shipping date to the installation date is too long. The installation date is the date and time as a starting date of the warranty period, and thus if incorrect date and time is set, it is not possible to correctly determine arrival of the warranty period. Thus, the control device 60 causes the display input device 67 to display the initial setting screen again (S13) and requests input of a correct installation date.

Meanwhile, if the interim period is less than the threshold period (S14: No), the control device 60 causes the memory 62 to store the initial setting information (the installation date and the warranty period for each component) input to the initial setting screen as illustrated in FIGs. 4B and 4C (S16). In other words, the control device 60 causes the memory 62 to store the respective identifiers (typically, the names) of the components for each warranty period. FIG. 4B is the initial setting information if the "standard warranty period" is chosen, and FIG. 4C is the initial setting information if the "extended warranty period" is chosen. In the description below, a warranty list display process is described assuming that the installation date of "2024/10/01" is input and the "extended warranty period" is chosen.

### Warranty List Display Process

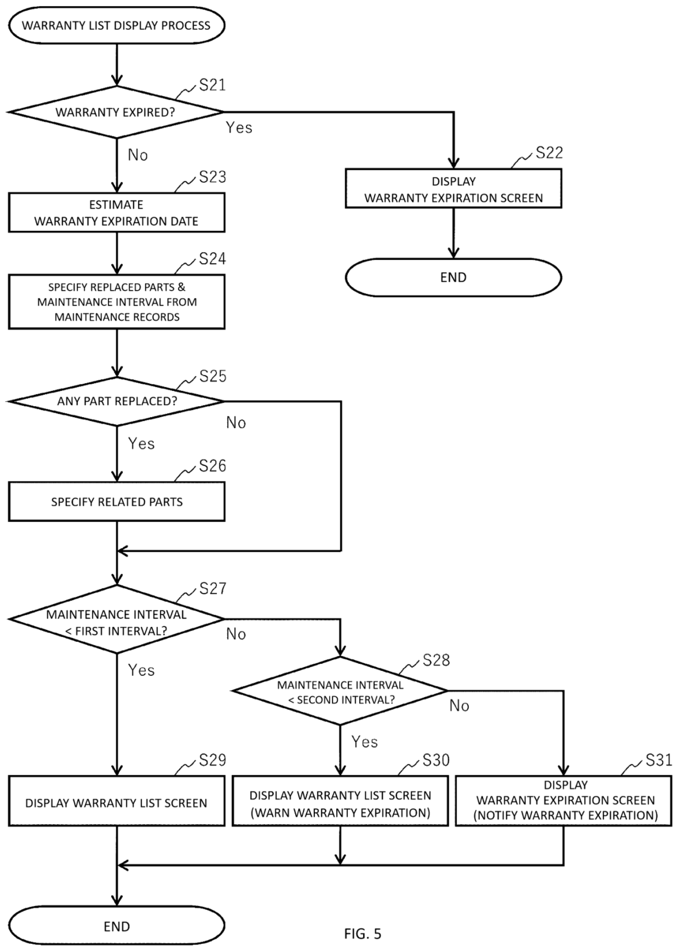

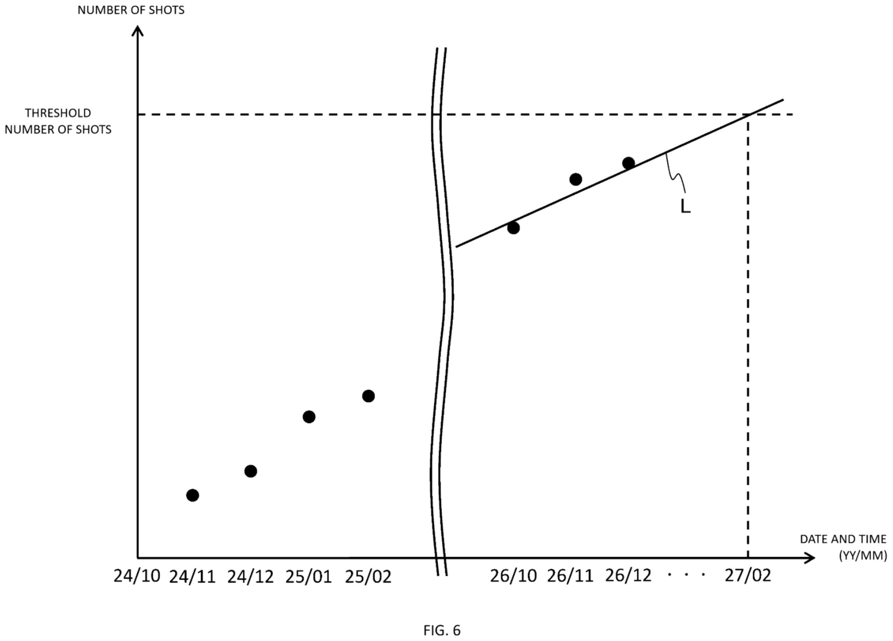

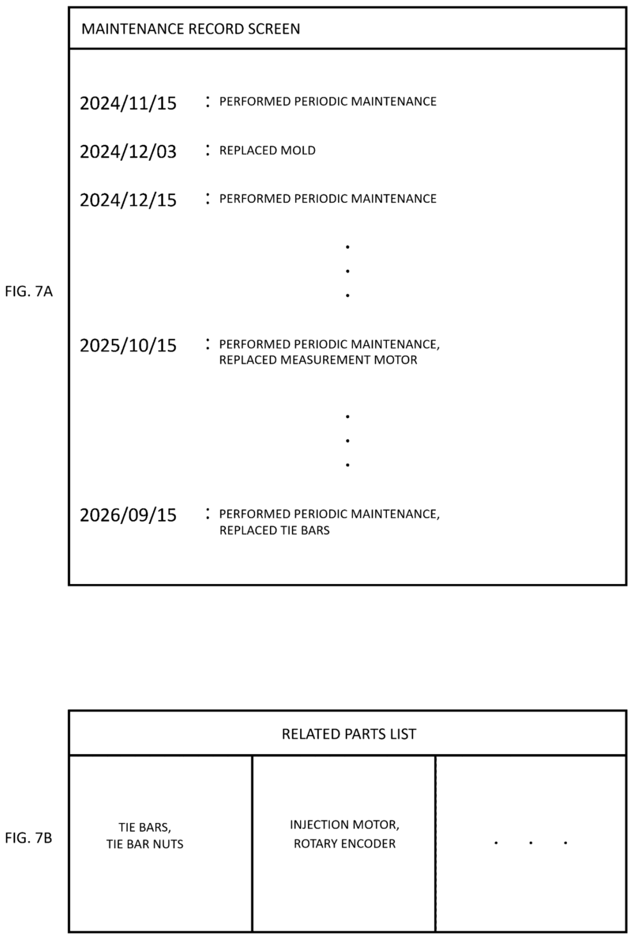

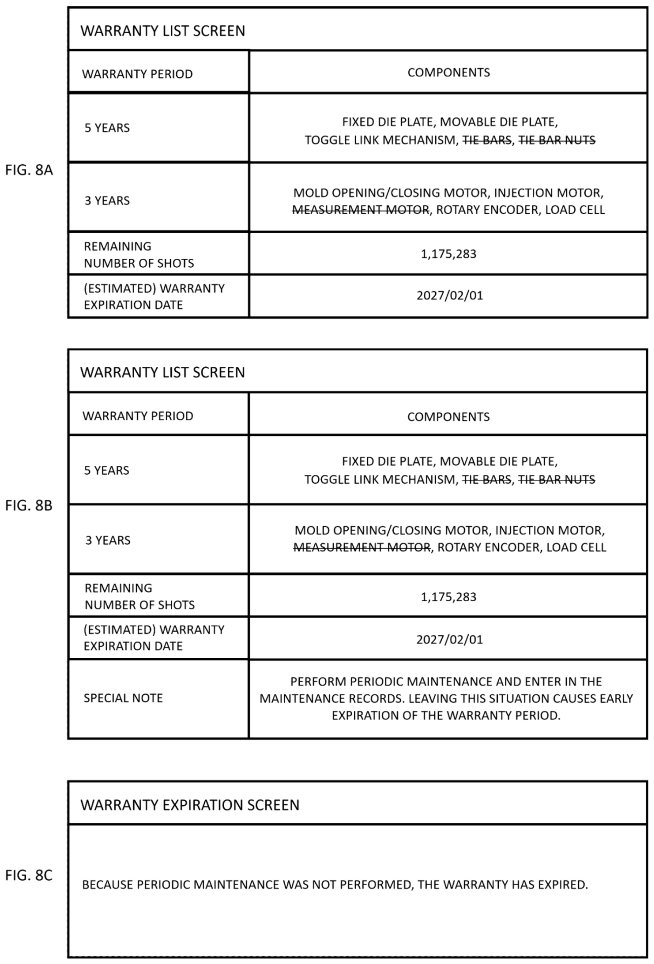

FIG. 5 is a flowchart of the warranty list display process. FIG. 6 is a chart illustrating the progression of the number of shots. FIG. 7A is a diagram illustrating an example of maintenance records and FIG. 7B is a diagram illustrating an example of a related parts list. FIG. 8 illustrates diagrams of examples of a screen that can be displayed in the warranty list display process. The warranty list display process is a process to cause the display input device 67 to display any of the screens exemplified in FIG. 8. The control device 60 performs the warranty list display process in accordance with, for example, instructions by a user through the display input device 67.

At first, the control device 60 determines whether the warranty periods for all the components have expired (S21). That is, the control device 60 determines whether the longest period (e.g., five years) of the selected warranty period has passed and whether the number of shots reaches the threshold number of shots. Then, if the control device 60 determines that the warranty periods for all the components have expired (S21: Yes), the control device 60 causes the display input device 67 to display the warranty expiration screen, not shown, indicating that the warranty periods for all the components have expired (S22) and ends the warranty list display process without performing the processes at step S23 and later.

Meanwhile, if the control device 60 determines that the warranty period(s) for all or part of the components have not expired (S21: No), the control device 60 estimates the date and time (hereinafter, referred to as a "warranty expiration date") expected that the number of shots reaches the threshold number of shots (S23). The warranty expiration date is a date in the future expected that the warranty periods for all the components have expired. Examples of the method of estimating the warranty expiration date include, but not particularly limited to, estimation based on the progression of the number of shots illustrated in FIG. 6. FIG. 6 is a monthly plot with the date and time from the installation date on the abscissa and the accumulated value of the number of shots on the ordinate. It should be noted that the method of totalizing the progression of the number of shots is not limited to the example in FIG. 6. The control device 60 then estimates the warranty expiration date (2027/02/01 in the example of FIG. 6) from the progression of the number of shots in the past.

As an example, the control device 60 specifies a straight line L connecting the origin (date and time = 2024/10/01, number of shots = 0) and the latest plot (date and time = 2026/12/01, number of shots = 8,824,717) and estimates the date and time that the straight line L reaches the threshold number of shots as the warranty expiration date. As another example, the control device 60 specifies an approximation function of the data (plot) illustrated in FIG. 6 by the least squares method and estimates the date and time that the specified approximation function reaches the threshold number of shots as the warranty expiration date. As still another example, the control device 60 may input the data illustrated in FIG. 6 to an artificial intelligence (AI) server and cause the server to estimate the warranty expiration date.

Then, the control device 60 analyzes the maintenance records illustrated in FIG. 7A and specifies the replaced components and an interval (hereinafter, referred to as a "maintenance interval") from the last periodic maintenance to the present. The periodic maintenance is, for example, maintenance that a user of the injection molding machine 10 should perform periodically (e.g., per month), and its details are described in an instruction manual and the like of the injection molding machine 10.

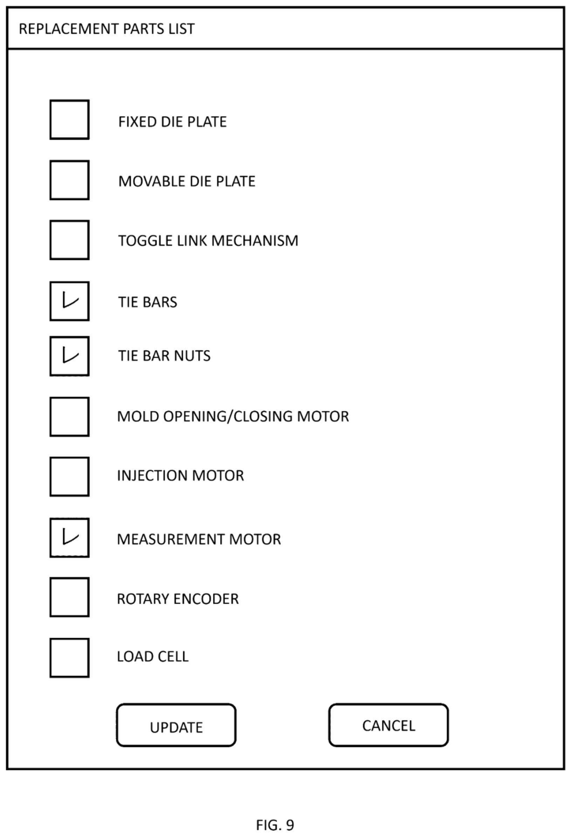

The maintenance records are data stored in the memory 62, the data containing an arbitrary character string input by a user through the display input device 67 in association with the date and time of inputting the character string. A user is allowed to add the maintenance records at an arbitrary timing through the display input device 67. That is, it is possible to use the maintenance records as a note (e.g., operational report) allowing arbitrary information to be written, and thus the maintenance records are very versatile and user friendly compared with, for example, a checklist illustrated in FIG. 9 and the like. Moreover, as illustrated in FIG. 7A, for example, the maintenance records may be chronologically displayed on the display input device 67.

The control device 60 extracts, for example, character strings "REPLACED MEASUREMENT MOTOR" and "REPLACED TIE BARS" from the maintenance records illustrated in FIG. 7A and specifies the measurement motor 38 and the tie bars 27 as the replaced components (hereinafter, referred to as "replaced parts"). As an example, if an identifier of a component and a specific character string (e.g., "REPLACE", "CHANGE", "SUBSTITUTE") are contained in a predetermined number of characters, the control device 60 determines that the component identified by the identifier is replaced. As another example, the control device 60 may input the maintenance records illustrated in FIG. 7A to an Al server to cause the server to specify the replaced component(s).

The control device 60 extracts, for example, the latest date and time (in the present embodiment, 2026/09/15) associated with the character string "PERFORMED PERIODIC MAINTENANCE" from the maintenance records illustrated in FIG. 7A and specifies the interval between the date and time thus extracted and the current date and time as the maintenance interval. As an example, the control device 60 may extract a preset character string (e.g., "MAINTENANCE", "MAINT.") indicating that periodic maintenance is performed and use the latest date and time, among the dates and times associated with the character string thus extracted, as the date and time of performing the last periodic maintenance. As another example, the control device 60 may input the maintenance records illustrated in FIG. 7A to an AI server and cause the server to use the date and time of performing the last periodic maintenance.

It should be noted that the control device 60 may cause the memory 62 to store the position (the latest date and time) of the maintenance record analyzed in the warranty list display process in the past to analyze only the difference in the next warranty list display process.

Then, if the control device 60 specifies the replaced parts at step S24 (S25: Yes), the control device 60 specifies related parts from the related parts list illustrated in FIG. 7B (S26). The related parts list is a list of components by grouping those to be simultaneously replaced. The related parts list is considered to be, for example, already stored in the memory 62 when the injection molding machine 10 is shipped. In the example of FIG. 7B, the tie bars 27 and the tie bar nuts are grouped, and the injection motor 37 and the rotary encoder 64 are grouped.

The control device 60 then specifies all the components (hereinafter, referred to as "related parts") belonging to the group identical to the replaced parts specified at step S24 (S26). For example, if the control device 60 specifies the measurement motor 38 and the tie bars 27 as the replaced parts (S24), the control device 60 specifies the tie bar nuts as the related parts of the tie bars 27 (S26). Meanwhile, if no replaced parts are specified at step S24 (S25: No), the control device 60 does not perform the process at step S26.

Then, the control device 60 compares the maintenance interval specified at step S24 with a first interval and with a second interval (S27 and S28). The first interval (e.g., two months) is set longer than an interval (e.g., one month) of performing the periodic maintenance defined in an instruction manual and the like. In addition, the second interval (e.g., three months) is set even longer than the first interval. The first interval and the second interval are stored in the memory 62 in advance.

Then, if the maintenance interval is less than the first interval (S27: Yes), the control device 60 causes the display input device 67 to display, for example, a warranty list screen illustrated in FIG. 8A (S29). In addition, if the maintenance interval is the first interval or more and less than the second interval (S27: No & S28: Yes), the control device 60 causes the display input device 67 to display, for example, a warranty list screen illustrated in FIG. 8B (S30). Still in addition, if the maintenance interval is the second interval or more (S27: No & S28: No), the control device 60 causes the display input device 67 to display, for example, a warranty expiration screen illustrated in FIG. 8C (S31).

On the warranty list screens illustrated in FIGs. 8A and 8B, the control device 60 causes the respective identifiers "FIXED DIE PLATE", "MOVABLE DIE PLATE", "TOGGLE LINK MECHANISM", "MOLD OPENING/CLOSING MOTOR", "INJECTION MOTOR", "ROTARY ENCODER", and "LOAD CELL" of the components to be displayed in a list for each warranty period (three years, five years). In addition, on the warranty list screens illustrated in FIGs. 8A and 8B, the control device 60 deletes the identifiers "TIE BARS" and "MEASUREMENT MOTOR" of the replaced parts specified at step S24 and the identifier "TIE BAR NUTS" of the related parts specified at step S26. It should be noted that the "deletion of the identifier(s)" may be in a mode allowing recognition of deletion, such as hiding the identifier(s) or adding strikeout(s) on the identifier(s) as in FIGs. 8A and 8B. Still in addition, on the warranty list screens illustrated in FIGs. 8A and 8B, the control device 60 causes "REMAINING NUMBER OF SHOTS" obtained by subtracting the number of shots stored in the memory 62 from the threshold number of shots and the warranty expiration date "2027/02/01" estimated at step S23 to be displayed.

On the warranty list screen illustrated in FIG. 8B, the control device 60 also causes a special note "PERFORM PERIODIC MAINTENANCE AND ENTER IN THE MAINTENANCE RECORDS. LEAVING THIS SITUATION CAUSES EARLY EXPIRATION OF THE WARRANTY PERIOD." to be displayed. This special note is an example of a warning against early expiration of the warranty period.

On the warranty expiration screen illustrated in FIG. 8C, the control device 60 also causes a message "BECAUSE PERIODIC MAINTENANCE WAS NOT PERFORMED, THE WARRANTY HAS EXPIRED." to be displayed. This message is an example of a notice that the warranty periods for all the components have expired early.

### Actions and Effects of Embodiments

The above embodiments allow a user to readily recognize the respective warranty periods for the components by displaying the identifiers of the plurality of components constituting the injection molding machine 10 in a list for each warranty period. In addition, the warranty list screens in FIGs. 8A and 8B may be used not only by users of the injection molding machine 10 but also by servicemen to check the warranty periods.

Still in addition, if the replaced components are specified, the above embodiments allow a user to readily recognize expiration of the warranty periods for the already replaced components by deleting the identifiers of the components from the warranty list screens.

Yet in addition, the above embodiments allow appropriate specification of the replaced components, by analyzing the maintenance records to specify the replaced part(s), while maintaining the versatility of the maintenance records allowing input of an arbitrary character string.

Meanwhile, there is a possibility that a user enters only main parts (e.g., tie bars) in the maintenance records among the plurality of replaced parts and does not enter other accessory parts (e.g., tie bar nuts) in the maintenance records. Thus, as described in the above embodiments, the plurality of components to be simultaneously replaced are grouped in advance, and when one of them is specified as the replaced part, all the components belonging to the identical group are determined to be replaced. It is thus possible to even more appropriately specify the replaced components.

In addition, if the maintenance interval is the first interval or more and less than the second interval, the above embodiments allow a user to be prompted for performing periodic maintenance by warning that the warranty period will expire early in the near future.

Still in addition, if the maintenance interval is the second interval or more, the above embodiments allow a user to readily recognize that the warranty period has expired by notifying that the warranty period has expired early.

Yet in addition, the above embodiments allow a user to readily recognize the expiration date of the warranty period by estimating the warranty expiration date expected that the counted number of shots reaches the threshold number of shots and displaying the estimated date.

Moreover, the above embodiments use the installation date as the start date and time of the warranty periods, and even if it takes time to transport the injection molding machine 10, for example, allow setting of the appropriate warranty periods. Meanwhile, if the installation date is incorrectly input, the warranty period sometimes becomes too long. It is thus possible to set appropriate warranty periods by requesting reinput of the installation date if the interim period is the threshold period or more.

### Modifications

FIG. 9 is an example of a screen illustrating a replacement parts list. The control device 60 may cause the display input device 67 to display the replacement parts list illustrated in FIG. 9. Then, the control device 60 may specify the components corresponding to the checkboxes checked by a user through the display input device 67 as the replaced parts. It is thus possible to readily specify the replaced parts. Moreover, the method of specifying the replaced part(s) is not limited to these examples, and the control device 60 may specify the replaced part(s) by, for example, communicating with the respective components by an Internet of Things (IoT) technique.

In addition, the initial setting information is not limited to being input through the initial setting screen. As another example, the control device 60 may obtain the warranty period stored in each component by the loT technique. Still in addition, the control device 60 may use the date and time of the system clock at the time of being turned on for the first time as the installation date. In this case, the processes at steps S14 - S15 can be omitted. Yet in addition, the processes in FIG. 5 can be omitted partially (more specifically, all or part of steps S23 - S28, S30 - S31).

The embodiments described above are merely explanatory examples of the present invention and are not intended to limit the scope of the present invention only to those embodiments. Those skilled in the art are capable of carrying out the present invention in various other modes without departing from the spirit of the present invention.

## Claims

1. A molding machine, comprising:
a clamping device configured to open, close, and clamp a mold;
an injection device configured to inject a molding material into a cavity of the clamped mold;
a display device configured to display information; and
a control device configured to control the clamping device, the injection device, and the display device, wherein
the control device causes the display device to display a warranty list screen displaying respective identifiers of a plurality of components constituting the molding machine in a list for each warranty period.

2. The molding machine according to Claim 1, wherein, if the control device specifies which of the components is replaced, the control device deletes the identifier of the specified component from the warranty list screen.

3. The molding machine according to Claim 2, further comprising an input device configured to accept input of information from an operator, wherein the control device
includes a memory to store a character string input through the input device and analyzes the character string stored in the memory to specify the replaced component.

4. The molding machine according to Claim 3, wherein
the memory stores the components by grouping those to be simultaneously replaced, and
if the control device specifies which of the components is replaced, the control device deletes the identifiers of all the components belonging to a group identical to the specified component from the warranty list screen.

5. The molding machine according to Claim 3, wherein the control device
analyzes the character string stored in the memory to specify a maintenance interval from a last periodic maintenance to present and,
if the maintenance interval is a first interval or more, causes the display device to display the warranty list screen containing a warning against early expiration of the warranty period.

6. The molding machine according to Claim 5, wherein,
if the maintenance interval is a second interval or more, the second interval being longer than the first interval, the control device causes the display device to display the warranty list screen containing a notice that the warranty periods for all the components have expired early.

7. The molding machine according to Claim 1, wherein the control device
counts a number of shots of injecting the molding material from the injection device, and
if the counted number of shots reaches a threshold number of shots, causes the display device to display a warranty expiration screen indicating expiration of warranty for all the components regardless of whether the warranty periods have come.

8. The molding machine according to Claim 7, wherein the control device
estimates a warranty expiration date that the counted number of shots reaches the threshold number of shots and
causes the display device to display the warranty list screen containing the estimated warranty expiration date.

9. The molding machine according to Claim 1, further comprising an input device configured to accept input of information from an operator, wherein the control device
accepts input of an installation date of installing the molding machine through the input device, and
if an interim period from a shipping date of shipping the molding machine to the installation date is a threshold period or more, requests reinput of the installation date, and
if the interim period is less than the threshold period, uses the installation date as start date and time of each warranty period.
